Europäisches Patentamt

**European Patent Office**

Office européen des brevets

(19)

(11) Numéro de publication: **0 267 817
B1**

(12)

# FASCICULE DE BREVET EUROPEEN

(45) Date de publication du fascicule du brevet:
06.12.89

(51) Int. Cl.⁴: **B62B 3/02**

(21) Numéro de dépôt: **87402193.4**

(22) Date de dépôt: **02.10.87**

(54) **Chariot de transport à pousser.**

(30) Priorité: **23.10.86 FI 864290**

(43) Date de publication de la demande:
**18.05.88 Bulletin 88/20**

(45) Mention de la délivrance du brevet:
**06.12.89 Bulletin 89/49**

(84) Etats contractants désignés:
**AT BE CH DE ES FR GB GR IT LI LU NL SE**

(56) Documents cités:
**EP-A- 0 048 135
FR-A- 365 646
FR-A- 1 323 689
FR-A- 2 420 468
GB-A- 2 052 399
US-A- 2 992 010**

(73) Titulaire: **OSTOSVAUNUHUOLTO OY, Kivitie 1,
SF-04400 Järvenpää(FI)**

(72) Inventeur: **Hagelin, Kunto, c/o Ostosvaunuhuolto Oy
Kivitie 1, SF-04400 Järvenpää(FI)**

(74) Mandataire: **Tony-Durand, Serge, Cabinet
Tony-Durand 77, rue Boissière, F-75116 Paris(FR)**

## Description

L'invention a pour objet un chariot de transport à pousser à la main, qui est destiné à être utilisé comme chariot de transport de marchandises, en particulier dans les libres services de gros ainsi que dans les entrepôts de magasins.

Des chariots de transport poussés manuellement sont utilisés dans de nombreuses conditions d'emploi de type varié, de sorte qu'il existe de nombreux types différents de chariots.

Un type de chariot de transport généralement utilisé est le chariot employé dans les magasins, et qui comporte quatre roues, qui sont toutes orientables autour d'un axe vertical. L'avantage de ces chariots de transport est que leur châssis peut être conçu de façon qu'il soit possible d'emboîter ceux-ci les uns dans les autres, afin de les rassembler dans un petit volume lorsqu'ils ne sont pas utilisés. A cet effet, au lieu d'être portées par une plateforme inférieure, les roues d'appui au sol sont fixées aux quatre coins d'une ceinture horizontale inférieure de forme trapézoïdale dont la grande base est tournée vers l'arrière et est complètement ouverte pour permettre l'emboîtement d'un autre chariot identique. Cependant ces chariots présentent l'inconvénient d'être difficiles à diriger dans la direction voulue, étant donné qu'ils ont tendance à aller dans une direction non souhaitée. Cet inconvénient est d'autant plus grand que la charge est importante sur le chariot. On a essayé de remédier à cet inconvénient sur ces chariots à quatre roues, en prévoyant que seules les roues de la paire arrière soient pivotantes. Cependant ces chariots ont alors un grand rayon de braquage, de sorte que la manoeuvre de ceux-ci est peu aisée.

Il existe par ailleurs un autre type de chariots qui, dans le but de posséder une plus grande manoeuvrabilité, possèdent une paire de roues centrales non orientables en plus de deux paires de roues orientables disposées respectivement à l'avant et à l'arrière, ces roues centrales étant placées plus bas que les roues avant et arrière. Ces chariots sont particulièrement faciles à manoeuvrer car ils pivotent sur la paire de roues centrale et même s'ils sont lourdement chargés, ils sont faciles à conduire. Cependant ces chariots de transport ont comme défaut, le fait qu'ils ne s'emboîtent pas l'un dans l'autre et requièrent dans ces conditions un grand volume de rangement. En effet pour permettre la présence de roues centrales, les chariots de ce type comportent une plateforme inférieure au-dessous de laquelle sont fixées ces roues. Ceci exclut donc toute possibilité d'emboîtement de ces chariots.

La présente invention a pour objet d'éliminer les inconvénients mentionnés plus haut et de fournir un chariot de transport présentant une très bonne manoeuvrabilité, tout en possédant une possibilité d'emboîtement avec d'autres chariots identiques.

A cet effet le chariot de l'invention comprend un châssis inférieur équipé d'une paire de roues avant orientables et d'une paire de roues arrière également orientables, ainsi que d'une ou deux roues centrales non orientables et qui sont plus basses que le plan défini par les paires de roues avant et arrière, et ce chariot est caractérisé en ce que :
- son châssis inférieur est constitué par deux barres latérales qui sont placées sur les côtés opposés du plan de symétrie longitudinal du chariot, et deux barres centrales fixées à leurs extrémités antérieures sur les extrémités avant des barres latérales, lesquelles barres centrales sont placées sur les côtés opposés du plan de symétrie longitudinal du chariot, de telle façon que les extrémités arrière des barres centrales soient plus rapprochées du plan de symétrie que leurs extrémités avant, le châssis inférieur affectant ainsi la forme générale d'un M lorsqu'il est vu de l'arrière,
- et que la ou les roues centrales sont disposées au-dessous et sous les extrémités arrière de ces barres centrales, cependant que les roues avant sont placées sous les extrémités avant communes des barres latérales et des barres centrales et que les roues arrière sont situées sous les extrémités arrière des barres latérales.

Ainsi la structure particulière du châssis inférieur du présent chariot permet que malgré la présence des roues centrales, il est possible d'emboîter les uns dans les autres plusieurs chariots de ce type de la même façon que les chariots dépourvus de roues centrales. Dans ces conditions, les bonnes caractéristiques des chariots connus sont combinées dans le chariot de transport selon l'invention, à savoir une bonne manoeuvrabilité ainsi que la possibilité d'emboîter ceux-ci les uns dans les autres.

Dans une forme de réalisation avantageuse le châssis inférieur du présent chariot supporte un plateau de chargement sous lequel il est prévu des dispositifs de soulèvement maintenant sa partie arrière à un niveau plus haut que sa partie avant lorsque ce plateau n'est pas chargé.

Un exemple de réalisation du chariot selon l'invention est décrit ci-après en référence au dessin annexé, sur lequel :

- La figure 1 représente une vue en perspective d'un chariot de transport conforme à l'invention,
- La figure 2 représente une vue de dessus du châssis inférieur de ce chariot de transport,
- La figure 3 est un schéma illustrant le mode d'emboîtement de deux chariots de ce type.

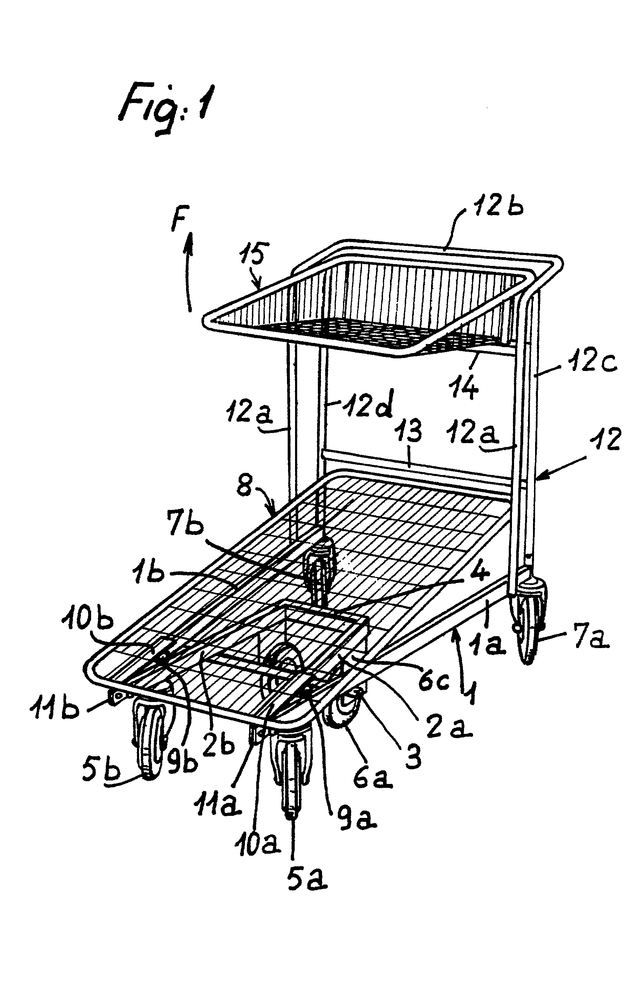

Le chariot de transport, conforme à l'invention, représenté figure 1 est destiné à être poussé à la main. Ce chariot comporte d'abord un châssis inférieur sur lequel sont fixées les trois paires de roues prévues. Ce châssis comprend deux paires de barres disposées horizontalement, on à peu près horizontalement, à savoir : deux barres latérales 1a et1b, et deux barres centrales 2a et 2b. Ce châssis comprend également un tube transversal 3 et une traverse 4. Le tube transversal 3 est disposé à l'avant pour réunir les barres latérales et les barres centrales. Quant à la traverse 4, elle réunit les extrémités arrière des barres centrales.

Les roues 5a et 5b pivotantes de la paire de roues avant sont fixées sous les extrémités avant communes des barres latérales et centrales. Quant aux roues 6a et 6b non pivotantes de la paire de roues centrale, elles sont fixées au moyen de flasques 6c sous les extrémités arrière 2a et 2b des barres centrales. Enfin les roues 7a et 7b pivotantes de la paire arrière de roues sont fixées pour leur part sous les extrémités arrière des barres latérales 1a et 1b. La paire de roues centrale est montée selon une méthode connue de telle manière qu'elle se trouve plus bas que le plan déterminé par les roues avant et arrière. Les roues avant, 5a et 5b du chariot sont ainsi un peu en l'air.

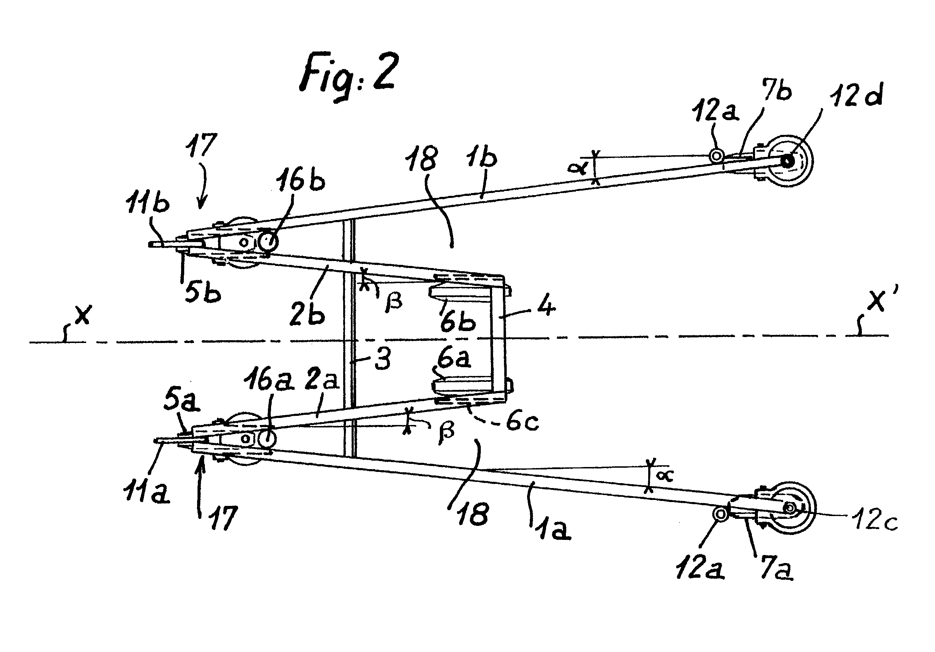

Le châssis 1 supporte un plateau de chargement 8 inférieur grillagé qui, à l'état non chargé, se trouve dans la position représentée à la figure 1, de telle manière que la partie arrière de celui-ci soit plus haute que sa partie avant. A cet effet il est prévu des ressorts à boudin 9a et 9b interposés entre des plaques d'appui portées par le plateau de chargement 8 et des pièces d'appui 16a et 16b (voir figure 2) fixées entre les barres latérales et les barres centrales, en arrière des roues avant 5a et 5b. Par ailleurs le plateau de chargement 8 est pivotant à son extrémité avant sur des supports 11a et 11b se trouvant entre les barres latérales et centrales. Les ressorts à boudin 9a et 9b relèvent ainsi vers le haut, la partie arrière du plan de chargement, lorsque la charge est retirée du plateau de chargement 8.

Sur la partie arrière du châssis inférieur 1 du chariot de transport, il est fixé une structure 12 de brancard qui est essentiellement verticale. Cette structure comprend un tube 12a, fixé en avant des roues arrière sur les barres latérales 1a et 1b. A sa partie supérieure ce tube 12a est cintré vers l'arrière pour former une poignée de préhension 12b. Les tubes 12c et 12d verticaux de cette structure sont fixés entre les barres latérales 1a et 1b et les parties du tube 12a qui s'étendent vers l'arrière. Un tube transversal 13 réunit les deux tubes 12c et 12d afin de renforcer la construction et de servir de butée vers le haut pour la partie arrière du plan de chargement 8 lorsqu'il se relève.

Les parties verticales du tube 12a sont réunies par un tube transversal 14, sur lequel repose un panier supérieur 15. Le fond de ce panier supérieur est incliné légèrement vers l'arrière et est pivotant sur des pièces en saillie se trouvant sur les tubes 12c et 12d, sur sa partie arrière, de sorte que le panier supérieur peut être pivoté vers le haut dans la direction de la flèche F en position essentiellement verticale. Ce pivotement est nécessaire afin que les chariots puissent être emboîtés l'un dans l'autre.

Sur la figure 2, on a représenté de façon plus précise, la structure constituant le châssis inférieur 1 du chariot. Le plan de symétrie dans le sens longitudinal du chariot de transport est repéré par XX'. Ainsi que déjà mentionné en relation avec la figure 1, deux barres latérales 1a et 1b font partie du châssis inférieur. Ces barres latérales sont placées sur les côtés opposés du plan de symétrie XX' longitudinal du chariot de telle façon que leurs extrémités avant soient plus rapprochées du plan de symétrie que leurs extrémités arrière. Le châssis se rétrécit par conséquent en forme de coin vers l'avant. Les barres centrales 2a et 2b s'étendent vers l'arrière à partir des extrémités avant des barres latérales. Ces barres centrales sont disposées sur les côtés opposés du plan de symétrie de telle façon que leurs extrémités arrière soient plus rapprochées du plan de symétrie que leur extrémités avant.

Ainsi le châssis inférieur horizontal 1 affecte la forme générale d'un M lorsqu'il est vu de l'arrière. Ce châssis comporte donc deux pointes 17 faisant saillie vers l'avant et il présente, sur chaque côté, deux espaces libres 18 ouverts vers l'arrière et dont chacun est compris entre une barre latérale 1a ou 1b et la barre centrale voisine 2a ou 2b.

L'angle des barres latérales 1a et 1b formé avec la direction du plan de symétrie XX' est repéré par $\alpha$ et l'angle formé de façon correspondante avec les barres centrales 2a et 2b est désigné par $\beta$. Les angles $\alpha$ et $\beta$ seront de façon avantageuse de la même importance et d'une valeur de 6 degrés environ.

Les extrémités arrière des barres centrales 2a et 2b sont réunies entre elles par la barre transversale 4. Il existe en outre, entre la partie avant du châssis et la barre transversale 4, un tube transversal 3, qui a été placé au dessous des barres latérales et centrales pour les réunir.

La figure 2 représente également, entre les barres centrales et latérales, les pièces d'appui 16a et 16b situées en arrière des axes verticaux des roues avant, et sur lesquelles portent les ressorts à boudin 9a et 9b (figure 1) pour relever vers le haut, le plan de chargement 8. Il ressort clairement aussi de la figure 2 que la distance entre les roues avant est plus réduite que la distance entre les roues arrière et que la distance entre les roues centrales est plus réduite que la distance entre les roues avant.

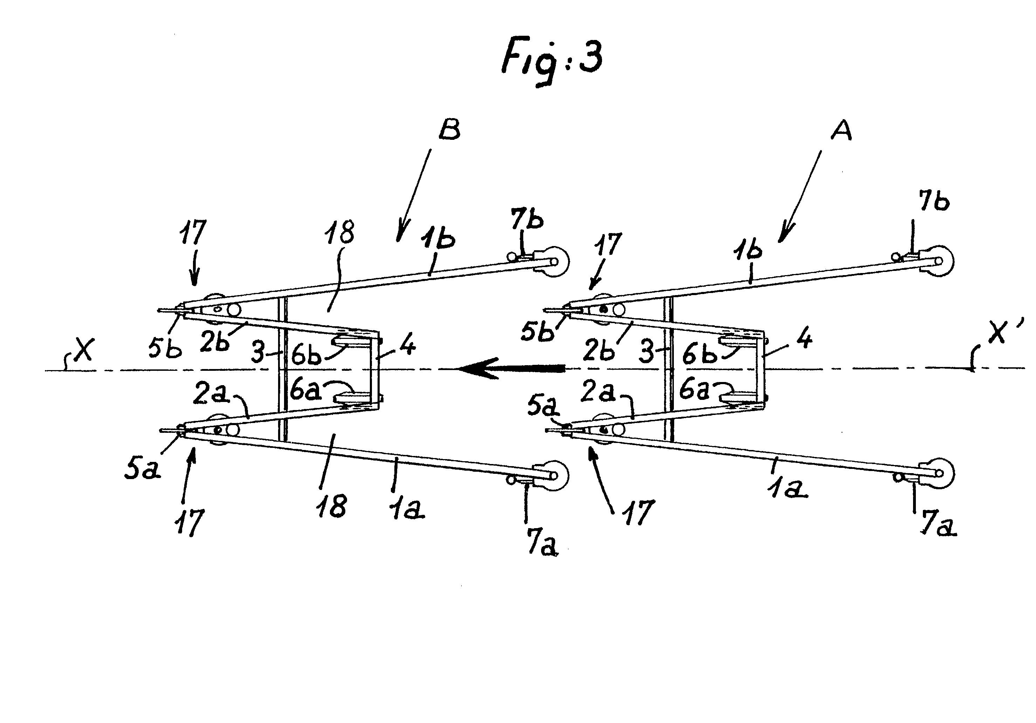

D'après la figure 2, on remarquera aussi comment on obtient, par la structure particulière du châssis inférieur 1, des conditions sans entraves qui permettent d'emboîter un tel chariot de transport dans un autre. Avant cet emboîtement, on relève le panier supérieur 15, verticalement, de façon qu'il ne s'accroche pas dans le chariot suivant. Comme illustré sur la figure 3, les chariots A et B rentrent l'un dans l'autre longitudinalement de telle manière que les deux pointes avant 17 du châssis inférieur du chariot arrière A puissent être engagées dans les deux espaces libres 18 qui, sur le châssis inférieur 1 du chariot avant B, sont ouverts vers l'arrière. Lors de cet emboîtement le tube transversal 3 du chariot arrière B rencontre les flasques 6b et 6c du chariot précédent A, au moyen desquels les roues centrales sont fixées sur les extrémités arrière des barres centrales. Il reste ainsi un petit espace entre le tube transversal 3 du chariot précédent et la construction des roues avant du chariot suivant. Cela est important pour que les roulements des roues avant ne soient pas endommagés au moment de l'emboîtement des chariots.

Même si l'invention a été expliquée plus haut, en se référant à un seul exemple conforme au dessin annexé, il est évident que l'invention ne se limite pas à celui-ci, mais peut être modifée de nombreuses manières dans le cadre de la construction conforme à l'invention précisée dans les revendications. Ainsi par exemple, les angles $\alpha$ et $\beta$ formés par les bar-

res latérales et centrales avec le plan de symétrie longitudinal du chariot peuvent avoir une valeur différente. Egalement la construction et la forme de la structure 12 et du panier supérieur 15 peuvent être modifiées de nombreuses manières sans s'écarter pour cela du cadre de l'invention précisé dans les revendications.

A ce sujet il convient de noter que chacune des roues de chaque paire de roues peut être remplacée par un ensemble de deux roues jumelées. Eventuellement les deux roues centrales distinctes 6a, 6b pourraient être remplacées par une roue centrale unique monté au dessous du milieu de la traverse 4.

Comme il a déjà été indiqué la conception particulière du présent chariot lui assure une excellente manoeuvrabilité grâce aux roues centrales, tout en permettant néanmoins son emboîtement avec d'autres chariots identiques. Cependant la présence des roues centrales 6a, 6b a également pour avantage de permettre au présent chariot de supporter des charges plus importantes qu'un chariot pouvu simplement d'une paire de roues avant et d'une paire de roues arrière.

## Revendications

1. Chariot de transport à pousser à la main, comprenant un châssis inférieur (1) équipé d'une paire de roues avant orientables (5a, 5b) et d'une paire de roues arrière également orientables (7a, 7b), ainsi que d'une ou deux roues centrales (6a, 6b) non orientables et qui sont plus basses que le plan défini par les paires de roues avant et arrière, **caractérisé** en ce que :
- son châssis inférieur (1) est constitué par deux barres latérales (1a, 1b) qui sont placées sur les côtés opposés du plan de symétrie longitudinal (X-X') du chariot, et deux barres centrales (2a, 2b) fixées à leurs extrémités antérieures sur les extrémités avant des barres latérales, lesquelles barres centrales sont placées sur les côté opposés du plan de symétrie longitudinal (B) du chariot, de telle façon que les extrémités arrière des barres centrales (2a, 2b) soient plus rapprochées du plan de symétrie (X-X') que leurs extrémités avant, le châssis inférieur (1) affectant ainsi la forme générale d'un M lorsqu'il est vu de l'arrière,
- et que la ou les roues centrales (6a, 6b) sont disposées au-dessous et sous les extrémités arrière de ces barres centrales (2a, 2b), cependant que les roues avant (5a, 5b) sont placées sous les extrémités avant communes des barres latérales (1a, 1b) et des barres centrales (2a, 2b) et que les roues arrière (7a, 7b) sont situées sous les extrémités arrière des barres latérales (1a, 1b).

2. Chariot de transport conforme à la revendication 1 du brevet, **caractérisé** en ce que les extrémités arrière des barres centrales (2a, 2b) sont réunies entre elles par une barre transversale (4).

3. Chariot de transport conforme à la revendication 1 ou 2, **caractérisé** en ce que l'angle (α) formé par les barres latérales (1a, 1b) avec la direction du plan de symétrie longitudinal (X, X') du chariot est essentiellement de même valeur que l'angle (β) formé par les barres centrales (2a, 2b) avec la même direction.

4. Chariot de transport conforme aux revendications du brevet 1, 2 ou 3, **caractérisé** en c e que les roues centrales (6a, 6b) sont fixées sur les parties arrière des barres centrales (2a, 2b).

5. Chariot de transport selon l'une des revendications précédentes, **caractérisé** en ce que son châssis inférieur (1) supporte un plateau de chargement (8) sous lequel il est prévu un dispositif de soulèvement maintenant sa partie arrière à un niveau plus haut que sa partie avant lorsque ce plateau n'est pas chargé.

6. Chariot de transport selon la revendication 5, **caractérisé** en ce que le dispositif de soulèvement du plateau de chargement (8) est constitué par des ressorts à boudins (9a, 9b) disposés entre des pièces d'appui (16a, 16b) situées entre les barres latérales et les barres centrales, et des plaques d'appui (10a, 10b) situées sur le plateau de chargement (8).

## Patentansprüche

1. Handkarren mit einem unteren Chassis (1), das mit einem Paar ausrichtbarer Vorderräder (5a, 5b) und einem Paar ebenfalls ausrichtbarer Hinterräder (7a, 7b) versehen ist, sowie mit einem oder zwei nicht ausrichtbaren mittleren Rädern (6a, 6b), die niedriger sind als die Ebene, die durch die Paare von Vorder- und Hinterräder definiert wird, dadurch gekennzeichnet, daß sein unteres Chassis (1) gebildet wird durch zwei Seitenstangen (1a, 1b), die auf den gegenüberliegenden Seiten der Längssymmetrieebene (X–X') des Karrens angeordnet sind, und zwei Mittelstangen (2a, 2b), die bei ihren vornliegenden Enden an den Vorderenden der Seitenstangen befestigt sind, wobei die Mittelstangen auf den gegenüberliegenden Seiten der Längssymmetrieebene (X–X') derart angeordnet sind, daß die Hinterenden der Mittelstangen (2a, 2b) näher an der Symmetrieebene (X–X') liegen als ihre Vorderenden, wodurch das untere Chassis (1) so die allgemeine Forn eines M annimmt, wenn es von hinten betrachtet wird, und daß das oder die mittleren Räder (6a, 6b) unterhalb und unter den Hinterenden der Mittelstangen (2a, 2b) angeordnet sind, während die Vorderräder (5a, 5b) unter den gemeinsamen Vorderenden der Seitenstangen (1a, 1b) und der Mittelstangen (2a, 2b) angeordnet sind und die Hinterräder (7a, 7b) unter den Hinterenden der Seitenstangen (1a, 1b) gelegen sind.

2. Handkarren nach Anspruch 1, dadurch gekennzeichnet, daß die Hinterenden der Mittelstangen (2a, 2b) durch eine Querstange (4) miteinander verbunden sind.

3. Handkarren nach Anspruch 1 oder 2, dadurch gekennzeichnet, daß der von den Seitenstangen (1a, 1b) mit der Richtung der Längssymmetrieebene (X–X') des Karrens gebildete Winkel (α) im wesentlichen den gleichen Wert aufweist wie der von den Mittelstangen (2a, 2b) mit der gleichen Richtung gebildete Winkel (β).

4. Handkarren nach Anspruch 1, 2 oder 3, dadurch gekennzeichnet, daß die mittleren Räder (6a, 6b) an den hinteren Abschnitten der Mittelstangen (2a, 2b) befestigt sind.

5. Handkarren nach einem der vorhergehenden Ansprüche, dadurch gekennzeichnet, daß sein unteres Chassis (1) eine Ladefläche trägt, unter welcher eine Anhebevorrichtung vorgesehen ist, die deren hinteren Abschnitt auf einem höheren Niveau hält als deren vorderen Abschnitt, wenn die Ladefläche (8) nicht beladen ist.

6. Handkarren nach Anspruch 5, dadurch gekennzeichnet, daß die Anhebevorrichtung der Ladefläche (8) gebildet wird durch Sprungfedern (9a, 9b), welche angeordnet sind zwischen Auflageteilen (16a, 16b), die zwischen den Seitenstangen und den Mittelstangen gelegen sind, und Auflageplatten (10a, 10b), die an der Ladefläche (8) gelegen sind.

## Claims

1. Carrier trolley to be pushed by hand, comprising a bottom frame (1) equipped with a front pair of swivelling wheels (5a, 5b) and with a rear pair of wheels which are also of the swivelling type (7a, 7b) as well as one or two non-swivelling central wheels (6a, 6b) which are lower than the plane defined by the front and rear pairs of wheels, characterized in that:

– its bottom frame (1) is constituted by two lateral bars (1a, 1b) which are placed on the opposite sides of the longitudinal plane of symmetry (X–X') of the trolley, and two central bars (2a, 2b) fixed at their front ends on the front ends of the lateral bars, said central bars being placed on the opposite sides of the longitudinal plane of symmetry (B) of the trolley in such a manner as to ensure that the rear ends of the central bars (2a, 2b) are closer to the plane of symmetry (X–X') than their front ends, with the result that the bottom frame (1) thus assumes the general shape of an M when seen from the rear,

– and that the central wheel or wheels (6a, 6b) are placed underneath and beneath the rear ends of said central bars (2a, 2b) whilst the front wheels (5a, 5b) are placed beneath the common front ends of the lateral bars (1a, 1b) and of the central bars (2a, 2b) and that the rear wheels (7a, 7b) are located beneath the rear ends of the lateral bars (1a, 1b).

2. Carrier trolley in accordance with claim 1 of the patent, characterized in that the rear ends of the central bars (2a, 2b) are connected to each other by means of a transverse bar (4).

3. Carrier trolley in accordance with claim 1 or 2, characterized in that the angle ($\alpha$) made by the lateral bars (1a, 1b) with the direction of the longitudinal plane of symmetry (X–X') of the trolley has essentially the same value as the angle ($\beta$) made by the central bars (2a, 2b) with the same direction.

4. Carrier trolley in accordance with claims 1, 2 or 3 of the patent, characterized in that the central wheels (6a, 6b) are fixed on the rear portions of the central bars (2a, 2b).

5. Carrier trolley in accordance with one of the preceding claims, characterized in that its bottom frame (1) supports a loading platform (8) beneath which is provided a lifting device for maintaining its rear portion at a higher level than its front portion when said platform is not loaded.

6. Carrier trolley in accordance with claim 5, characterized in that the device for lifting the loading platform (8) is constituted by coil springs (9a, 9b) placed between bearing members (16a, 16b) located between the lateral bars and the central bars, and bearing plates (10a, 10b) located on the loading platform (8).

Fig: 1

Fig. 2

# Fig:3

EP 0 267 817 B1